# EUROPEAN PATENT APPLICATION

(11) **EP 4 557 422 A1**
(43) Date of publication of application: **21.05.2025**
(21) Application number: 24182657.7
(22) Date of filing: 17.06.2024
(51) Int. Cl.: H01M 10/0525, H01M 50/42, H01M 50/423, H01M 50/443, H01M 50/446

(54) **COMPOSITE SEPARATOR AND METHOD FOR MANUFACTURING THEREOF**

(30) Priority: 20.11.2023 TW 112144778
(71) Applicant: BenQ Materials Corporation, 33341 Guishan Township (TW)
(72) Inventor: CHENG, KAI-WEI, 33341 Taoyuan City (TW); TZENG, PO-WEI, 33341 Taoyuan City (TW); CHENG, MENG-CHIA, 33341 Taoyuan City (TW); TSAI, TZUNG-YU, 33341 Taoyuan City (TW); HUANG, JU-HUI, 33341 Taoyuan City (TW)
(74) Representative: Murgitroyd & Company

(57) **Abstract**

A composite separator and a method for manufacturing thereof are disclosed. The composite separator comprises a porous polyolefin substrate and an inorganic coating layer, wherein the inorganic coating layer comprises a plurality of inorganic particles and a binder resin composition and coated on at least one surface of the porous polyolefin substrate, wherein the binder resin composition comprises an acrylonitrile-acrylamide-acrylate copolymer with a glass transition temperature (Tg) less than 0 °C and an amide-containing polymer with a glass transition temperature between 150 °C and 200 °C. The composite separator has good high temperature resistance.

## Description

### CROSS - REFERENCE TO RELATED APPLICATION

This application claims the benefit of Taiwanese patent application serial No. 112144778, filed on Nov. 20, 2023, the subject matter of which is incorporated herein by reference.

### BACKGROUND OF THE INVENTION

### Field of Invention

This invention relates to a composite separator, and in particular to a composite separator with a good thermal stability.

### Description of Related Art

With the development of the consumer electronics, wearable devices, electric vehicles and industrial energy storage fields, the requirements of safety and energy density of the lithium battery also increase. As an important insulating porous material in the lithium battery, the physical properties of the separator need to be further improved. In order to further ensure the safety of the lithium-ion battery, it is necessary to improve the high-temperature tolerance and reduce the thermal shrinkage rate at high temperatures of the separator of the lithium-ion battery to prevent electrodes of the lithium-ion battery from contacting each other due to abnormalities during application and causing thermal runaway.

The separator of the lithium-ion battery is made of polyolefin materials, such as, polyethylene (PE) or polypropylene (PP) and is mainly manufactured by dry-stretching or wet-stretching. The two methods basically are to melt a polymer resin to extrude the molten polymer resin into a film, and then stretch the film to form appropriate pores therein by dry-stretching or wet stretching. The dry-stretched separator is usually thicker and can be stacked in multi-layers with high safety and low cost under high power. The wet-stretched separator is suitable for forming a ceramic coating layer on the surface of a polyolefin substrate to form a composite separator due to its thin thickness, high porosity and uniform pore size. However, when resin binders are used to make ceramic particles adhere onto the polyolefin substrate, the strength of the resin binders is prone to decrease at high temperatures, and may even cause structural damage and thermal decomposition, which will significantly reduce the shrinkage resistance of the composite separator. It is known that the shrinkage resistance of the composite separator can be enhanced by increasing the thickness of the ceramic coating layer. However, as the separator tends to become thinner, the thinned ceramic coating layer cannot resist substantial shrinkage of the porous substrate at high temperatures, which results in overall shrinkage and inability to provide the thermal shrinkage resistance at high temperatures. For example, it cannot meet the requirement of thermal shrinkage ratio < 5% at 150°C. Therefore, a thinned ceramic coating may easily cause safety concerns due to reduced heat resistance.

### SUMMARY OF THE INVENTION

The present invention discloses a composite separator, and in particular to a composite separator with a good thermal stability.

An aspect of the present invention is to disclose a composite separator, comprising a porous polyolefin substrate; and an inorganic coating layer coated on at least one surface of the porous polyolefin substrate, wherein the inorganic coating layer comprises a plurality of inorganic particles and a binder resin composition, and an using amount of the binder resin composition is between 2 weight parts and 10 weight parts per 100 weight parts of the inorganic particles; wherein the binder resin composition comprises an acrylonitrile-acrylamide-acrylate copolymer with a glass transition temperature (Tg) less than 0 °C and an amide-containing polymer with a glass transition temperature between 150 °C and 200 °C.

According to the composite separator of the present invention, an using amount of the acrylonitrile-acrylamide-acrylate copolymer with a glass transition temperature (Tg) less than 0 °C is 40 wt% to 85 wt%, and an using of the amide-containing polymer with a glass transition temperature between 150 °C and 200 °C is 15 wt% to 60 wt%.

According to the composite separator of the present invention, the acrylonitrile-acrylamide-acrylate copolymer has a glass transition temperature (Tg) between -40 °C and 0 °C.

According to the composite separator of the present invention, the inorganic particles of the inorganic coating layer are Mg(OH)₂, BaSO₄, BaTiO₃, HfO₂, SrTiO₃, SnO₂, CeO₂, MgO, NiO, CaO, ZnO, ZrO₂, SiO₂, Y2O₃, Al(OH)₃, Al₂O₃, AlOOH, SiC, TiO₂, or combinations thereof.

According to the composite separator of the present invention, the inorganic particles have an average diameter (D50) ranging between 0.1 µm and 2.0 µm.

According to the composite separator of the present invention, the inorganic coating layer can comprises two or more kinds of inorganic particles with the same or different diameters.

According to the composite separator of the present invention, the thickness of the inorganic coating layer is between 0.1 µm and 5.0 µm.

According to the composite separator of the present invention, the thermal shrinkage ratio of the composite separator of the present invention after being heating at 150 °C for 1 hour in the machine direction (MD) and the transverse direction (TD) are both not more than 2%.

According to the composite separator of the present invention, the peeling strength between the inorganic coating layer and the porous polyolefin substrate of the composite separator of the present invention is more than 30 gf/cm.

Another aspect of the present invention is to disclose a method for manufacturing a composite separator, comprising the steps of: providing a porous polyolefin substrate; and coating a slurry comprising a plurality of inorganic particles, a binder resin composition and water on one or two surfaces of the porous polyolefin substrate to form an inorganic coating layer; wherein the binder resin composition comprises an acrylonitrile-acrylamide-acrylate copolymer with a glass transition temperature (Tg) less than 0 °C and an amide-containing polymer with a glass transition temperature between 150 °C and 200 °C.

Another aspect of the present invention is to disclose another composite separator, comprising a porous polyolefin substrate; and an inorganic coating layer coated on at least one surface of the porous polyolefin substrate, wherein the inorganic coating layer comprises a plurality of inorganic particles, a photo-reactive agent and a binder resin composition, wherein the binder resin composition has an using amount between 2 weight parts and 10 weight parts per 100 weight parts of the inorganic particles, and the photo-reactive agent has an using amount between 0.1 weight parts and 1.5 weight parts per 100 weight parts of the inorganic particles; wherein the binder resin composition comprises an acrylonitrile-acrylamide-acrylate copolymer with a glass transition temperature (Tg) less than 0 °C and an amide-containing polymer with a glass transition temperature between 150 °C and 200 °C.

According to the another composite separator of the present invention, the photo-reactive agent is 2-isopropylthioxanthone, thioxanthone, thioxanthone derivatives or combinations thereof.

Another aspect of the present invention is to disclose another method for manufacturing another composite separator, comprising the steps of: providing a porous polyolefin substrate; coating a slurry comprising a plurality of inorganic particles, a binder resin composition, water and a photo-reactive solution on one or two surfaces of the porous polyolefin substrate; and drying and irradiating the slurry with UV light to form an inorganic coating layer; wherein the binder resin composition comprises an acrylonitrile-acrylamide-acrylate copolymer with a glass transition temperature (Tg) less than 0 °C and an amide-containing polymer with a glass transition temperature between 150 °C and 200 °C.

According to the method for manufacturing another composite separator of the present invention, the photo-reactive solution comprises a photo-reactive agent and a solvent, and the photo-reactive agent has an using amount between 0.1 weight parts and 1.5 weight parts per 100 weight parts of the inorganic particles.

According to the method for manufacturing another composite separator of the present invention, the photo-reactive agent is 2-isopropylthioxanthone, thioxanthone, thioxanthone derivatives or combinations thereof.

According to the method for manufacturing another composite separator of the present invention, the solvent is toluene, methanol, methyl methacrylate, ethyl acetate, 1,2-dichloroethane, acetone, water, or combinations thereof.

The above and other aspects of the invention will become better understood with regard to the following detailed description of the preferred but non-limiting embodiment(s). These and other aspects of the invention will become apparent from the following description of the presently preferred embodiments. The detailed description is merely illustrative of the invention and does not limit the scope of the invention, which is defined by the appended claims and equivalents thereof. As would be obvious to one skilled in the art, many variations and modifications of the invention may be affected without departing from the spirit and scope of the novel concepts of the disclosure.

### DETAILED DESCRIPTION OF THE INVENTION

The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

In the following description, numerous specific details are described in detail in order to enable the reader to fully understand the following examples. However, embodiments of the present invention may be practiced in case no such specific details.

Unless defined otherwise, all technical and scientific terms used herein have the same meaning as commonly understood by one of ordinary skill in the art to which this invention belongs. Generally, the nomenclature used herein and the laboratory procedures are well known and commonly employed in the art. Conventional methods are used for these procedures, such as those provided in the art and various general references. Where a term is provided in the singular, the inventors also contemplate the plural of that term. The nomenclature used herein and the laboratory procedures described below are those well-known and commonly employed in the art.

The composite separator of the present invention comprises a porous polyolefin substrate; and an inorganic coating layer coated on at least one surface of the porous polyolefin substrate, wherein the inorganic coating layer comprises a plurality of inorganic particles and a binder resin composition, and an using amount of the binder resin composition is between 2 weight parts and 10 weight parts per 100 weight parts of the inorganic particles; wherein the binder resin composition comprises an acrylonitrile-acrylamide-acrylate copolymer with a glass transition temperature (Tg) less than 0 °C and an amide-containing polymer with a glass transition temperature between 150 °C and 200 °C.

The composite separator of the present invention can resist thermal shrinkage of the porous polyolefin substrate at high temperature to meet the requirement of thermal shrinkage resistance at high temperature, such as thermal shrinkage ratio not more than 2% at 150°C. Especially, when the inorganic coating layer of the composite separator is thinned to a thickness less than 5 µm, and more preferably thinned to a thickness less than 3 µm, both the thermal shrinkage ratio in machine direction (MD) and transverse direction (TD) of the composite separator are not more than 2% after being heating at 150°C for 1 hour. Therefore, the electrodes of the lithium-ion battery can be prevented from contacting with each other at high temperatures to avoid thermal runaway.

The inorganic coating layer of the composite separator of the present invention comprises 40 wt% to 85 wt% acrylonitrile-acrylamide-acrylate copolymer with a glass transition temperature (Tg) less than 0 °C, and 15 wt% to 60 wt% amide-containing polymer with a glass transition temperature between 150 °C and 200 °C.

According to the composite separator of the present invention, the binder resin composition of the inorganic coating layer comprises an acrylonitrile-acrylamide-acrylate copolymer with a glass transition temperature (Tg) less than 0 °C to enhance the adherence and high-temperature resistance of the interface by increasing the binding force between the inorganic particles and porous polyolefin substrate, and the property of low glass transition temperature (Tg) of the acrylonitrile-acrylamide-acrylate copolymer can generate a more flexible inorganic coating layer. Furthermore, the binder resin composition of the inorganic coating layer comprises an amide-containing polymer with a glass transition temperature between 150 °C and 200 °C, which can form a more rigid network structure to enhance the high-temperature shrink-resistance of the inorganic coating layer by preventing the inorganic coating layer from shrinking caused by the shrinking porous polyolefin substrate at a high temperature. The inorganic coating layer of the composite separator of the present invention comprises ingredients of different glass transition temperatures, thereby the inorganic coating layer will not be too soft or too rigid at a high temperature to affect the adhesion thereof. The thermal shrinkage ratio in machine direction (MD) and transverse direction (TD) of the composite separator of the present invention are not more than 2% after being heating at 150°C for 1 hour. Moreover, the binder resin composition of the inorganic coating layer has a good adherence with the porous polyolefin substrate, thus the inorganic coating layer can be tightly adhered on the porous polyolefin substrate with a peeling strength more than 30 gf/cm.

In one preferred embodiment of the present invention, the inorganic coating layer comprises 40 wt% to 80 wt% acrylonitrile-acrylamide-acrylate copolymer with a glass transition temperature (Tg) less than 0 °C, and 20 wt% to 60 wt% amide-containing polymer with a glass transition temperature between 150 °C and 200 °C.

In one preferred embodiment of the present invention, the using amount of the binder resin composition of the inorganic coating layer is between 2 weight parts and 8 weight parts per 100 weight parts of the inorganic particles.

According to the binder resin composition of the present composite separator, the acrylonitrile-acrylamide-acrylate copolymer with a glass transition temperature (Tg) less than 0 °C is a terpolymer of acrylonitrile monomer, acrylamide monomer and acrylate monomer. In one preferred embodiment of the present invention, the acrylonitrile-acrylamide-acrylate copolymer has a glass transition temperature (Tg) between -40 ° C and 0 ° C. Commercialized acrylonitrile-acrylamide-acrylate copolymers are suitable for the present invention, for example BM-950B (obtained from Zeon Corp., JP).

According to the binder resin composition of the present composite separator, the amide-containing polymer with a glass transition temperature between 150 °C and 200 °C is poly-n-vinylacetamide, amide-methylacrylate copolymer or acrylonitrile-acrylamide-methylacrylate copolymer. Commercialized amide-containing polymers with a glass transition temperature between 150 °C and 200 °C are suitable for the present invention, for example PNVA GE191series (GE191-103, GE191-104, GE191-107 or GE191-108) (obtained from Showa Denko K.K., JP), SF168L (obtained from Shenzhen Yanyi New Materials Co., Ltd., CN) and GR506 (obtained from Hunan Green Power Material Co.,Ltd., CN).

According to the inorganic coating layer of the present composite separator, commercialized inorganic particles that are heat resistant, electrically insulating and stable to electrolytes are suitable for the present invention, for example Mg(OH)₂, BaSO₄, BaTiO₃, HfO₂, SrTiO₃, SnO₂, CeO₂, MgO, NiO, CaO, ZnO, ZrO₂, SiO₂, Y₂O₃, Al(OH)₃, Al₂O₃, AlOOH, SiC or TiO₂, or combinations thereof. Preferably, Al₂O₃, AlOOH, SiC or TiO₂ are suitable for the present invention.

According to the inorganic coating layer of the present composite separator, the inorganic particles with smaller particles size are preferably utilized to enhance the contact surface areas thereof with the binder resin to increase the binding force therebetween. Furthermore, the gaps between the inorganic particles will also affect the electric property of the Li-battery since short circuit caused by the lithium dendrites may prone to occur by bigger gaps between inorganic particles with bigger particle size. Therefore, inorganic particles with an average diameter (D50) between 0.1 µm and 2.0 µm are suitable for the present invention, and preferably with an average diameter (D50) between 0.2 µm and 1.0 µm. In an preferred embodiment of the present invention, the inorganic coating layers comprises two or more kinds of inorganic particles with the same or different diameters.

According to the composite separator of the present invention, the inorganic coating layer further comprises a surfactant to enhance the surface affinity between the inorganic coating layer and the porous polyolefin substrate. Suitable surfactant is a siloxane surfactant, and the using amount of the surfactant is between 0.1 weight parts and 1.5 weight parts per 100 weight parts of the inorganic particles, and preferably between 0.1 weight parts and 1.0 weight parts per 100 weight parts of the inorganic particles.

According to the composite separator of the present invention, the porous polyolefin substrate suitable for the composite separator can be a single-layered or a multi-layered porous polyolefin substrate, for example but not limited to a single-layered polyethylene, a single-layered polypropylene, a double-layered polyethylene/polypropylene or a tri-layered polypropylene/polyethylene/polypropylene. In an embodiment of the present invention, the porous polyolefin substrate has a thickness of 5 µm to 30 µm, and preferably 5 µm to 20 µm, and has a porosity of 40% to 70%, and preferable 43% to 65%.

According to the composite separator of the present invention, the inorganic layer is coated on one or both sides of the porous polyolefin substrate. The thickness of the inorganic layer of the present high temperature resistant separator ranges between 0.5 µm and 5 µm, and preferably between 0.5 µm and 3 µm on one side or both sides of the porous polyolefin substrate, and preferably on both sides.

Therefore, improving the adhesion between the porous polyolefin substrate and the inorganic coating layer of the composite separator can not only enhance the thermal shrinkage resistance of the composite separator, but also avoid safety concern of the battery caused by interface peeling of the inorganic coating layer during the charge and discharge process. In a preferred embodiment of the composite separator of the present invention, the peeling strength between the porous polyolefin substrate and the thinned inorganic coating layer has a thickness of less than 5 µm, and preferably less than 3 µm, is more than 30 gf/cm.

According to the composite separator of the present invention, the inorganic layer can further comprise comprises additives such as antistatic agents, flame retardants, antioxidants, or surface modifiers as required.

Another aspect of the present invention is to disclose a method for manufacturing a composite separator, comprising the steps of: providing a porous polyolefin substrate; coating a slurry comprising a plurality of inorganic particles, a binder resin composition and water on one or two surfaces of the porous polyolefin substrate; and drying the slurry to form an inorganic coating layer on the porous polyolefin substrate; wherein the binder resin composition comprises an acrylonitrile-acrylamide-acrylate copolymer with a glass transition temperature (Tg) less than 0 °C and an amide-containing polymer with a glass transition temperature between 150 °C and 200 °C.

According to the method mentioned above, the slurry further comprises a dispersant, for example but not limited to an alkanolamine dispersant, an acrylate ammonium dispersant or combinations thereof, and the using of the dispersant is between 0.1 weight parts to 1.5 weight parts per 100 weight parts of the inorganic particles.

According to the method mentioned above, the inorganic coating layer can be coated onto the porous polyolefin substrate by any method known in the related art, for example but not limited to, bar coating, doctor blade coating, dip coating, roll coating, spinning coating, spray coating, slot-die coating and the like.

Another aspect of the present invention is to disclose another composite separator, comprising a porous polyolefin substrate; and an inorganic coating layer coated on at least one surface of the porous polyolefin substrate, wherein the inorganic coating layer comprises a plurality of inorganic particles, a photo-reactive agent and a binder resin composition, wherein the binder resin composition has an using amount between 2 weight parts and 10 weight parts per 100 weight parts of the inorganic particles, and the photo-reactive agent has an using amount between 0.1 weight parts and 1.5 weight parts per 100 weight parts of the inorganic particles; wherein the binder resin composition comprises an acrylonitrile-acrylamide-acrylate copolymer with a glass transition temperature (Tg) less than 0 °C and an amide-containing polymer with a glass transition temperature between 150 °C and 200 °C. After being irradiated with ultraviolet light, the photo-reactive agent in the inorganic coating layer will cause the hydrogen-containing carbon bonds in the binder resin composition of the inorganic coating layer and the hydrogen-containing carbon bonds on the surface of the polyolefin porous substrate to cross-link with each other by free radical reactions. Therefore, the high-temperature puncture resistance and high-temperature melting integrity of the composite isolation membrane can be strengthened without affecting the adhesion between the inorganic coating layer and the porous polyolefin substrate,.

In an embodiment of the present invention, the photo-reactive agent is 2-isopropylthioxanthone, thioxanthone, thioxanthone derivatives or combinations thereof.

Another aspect of the present invention is to disclose another method for manufacturing a composite separator, comprising the steps of: providing a porous polyolefin substrate; and coating a slurry comprising a plurality of inorganic particles, a binder resin composition, water and a photo-reactive solution on one or two surfaces of the porous polyolefin substrate to form an inorganic coating layer; wherein the binder resin composition comprises an acrylonitrile-acrylamide-acrylate copolymer with a glass transition temperature (Tg) less than 0 °C and an amide-containing polymer with a glass transition temperature between 150 °C and 200 °C.

In an embodiment of the present invention, the photo-reactive solution comprises a photo-reactive agent and a solvent, and the photo-reactive agent has an using amount between 0.1 weight parts and 1.5 weight parts per 100 weight parts of the inorganic particles.

In an embodiment of the present invention, the photo-reactive agent is 2-isopropylthioxanthone, thioxanthone, thioxanthone derivatives or combinations thereof.

In an embodiment of the present invention, the solvent is toluene, methanol, methyl methacrylate, ethyl acetate, 1,2-dichloroethane, acetone, or water, or combinations thereof.

The present invention will be explained in further detail with reference to the examples. However, the present invention is not limited to these examples.

### Example

The materials below are used in following examples:
SA0-030EN: Al₂O₃, particle size (D50): 0.52 µm, available from Shandong Sinocera Functional Materials Co., Ltd., CN
AM-BL-03: AlOOH, particle size (D50): 0.35 µm ^{,} available from Shandong Avant New Material Technology Co., Ltd, CN
BM-950B: acrylonitrile-acrylamide-methylacrylate copolymer containing lotion, solid content: 39% ^{,} glass transition temperature (Tg): -30 °C, available from Zeon Corporation, JP
GE191-103: poly-n-vinylacetamide containing lotion, solid content: 10% ^{,} glass transition temperature (Tg): 172°C, available from Showa Kako Corp., JP
SF168L: acrylonitrile-acrylamide-methylacrylate copolymer containing lotion, solid content: 12.5%, glass transition temperature (Tg): 180 °C, available from Shenzhen Yanyi New Materials Co., Ltd., CN
GR-506: amide containing polyacrylate lotion, solid content: 20%, glass transition temperature (Tg): 192 °C, available from Hunan Green Power Material Co.,Ltd., CN
BYK-154: Poly(Acrylate Ammonium) dispersant, solid content 42%, available from BYK
Angus Voltan 100: isopropanolamine dispersant, available from ANGUS Chemical Company, USA
BYK- ET -3061: polyether-modified silicone surfactant, available from BYK, Germany
BYK-ET-3032: Styrene-maleic acid dispersant, solid content 40%, available from BYK, Germany
DOUBLECURE-ITX: 2-isopropylthioxanthone, available from Double Bond Chemical Ind., Co., Lt, TW

### Example 1

100 g of Al₂O₃ (SA0-030EN), 4.49 g of acrylonitrile-acrylamide-methylacrylate copolymer containing lotion (BM-950B), 22 g of poly-n-vinylacetamide containing lotion (GE191-103), 0.95 g of Poly(Acrylate Ammonium) dispersant (BYK-154), and 0.5 g of polyether-modified silicone surfactant (BYK-3061) were add to mix with deionized water and well-stirred to obtained an inorganic particles containing slurry.

The obtained inorganic particles containing slurry was coated on two surfaces of a porous polyolefin substrate with a porosity of 48% and having a thickness of 9.2 µm. A composite separator with a thickness of 12.3 µm was obtained after the inorganic particles containing slurry coated on the porous polyolefin substrate was dried

The obtained composite separator was tested by the following testing methods. The testing results were shown as the following Table 1.

Measurement of Thickness: The thickness of the separator was measured according to GB/T6672-2001. The thickness Analyzer (VL-50-B, available from Mitutoyo, Japan) was used to measure the thickness of the separator. The measurement was conducted by a flat probe with a diameter of 3 mm under a measuring force of 0.01 N.

Measurement of Gurley number: The Gurley number was measured according to ASTM D-726. The separator was cut into a sample of 1 inch ×1 inch and tested by an air permeability tester. The Gurley number was obtained by measuring the time for 100 C.C. of air to pass through the separator.

Thermal shrinkage test: The separator was cut into a sample of 10 cm × 10 cm, and the initial length in machine direction (MD) and the initial length in transverse direction (TD) were measured and marked as M0 and T0 on the center of the sample before testing. Then the marked sample was sandwiched between two A4 papers and heated in an oven at 150°C for 1 hr. After heating, the sample was removed out of the oven and put in the same environment as that of the thermal shrinkage measuring instrument for 30 minutes, and then the length in machine direction (MD) and the length in transverse direction (TD) were measured and marked as M1 and T1.
The thermal shrinkage ratio in machine direction (MD) (SMD) is calculated by the following formula: (M0-M1)/M0 × 100%
The thermal shrinkage ratio in transverse direction (TD) (STD) is calculated by the following formula: (T0-T1)/T0 × 100%

Mechanical strength test: The mechanical strength was tested according to ASTM D882-09. The separator was cut along the machine direction (MD) and the transverse direction (TD) to obtain a sample with a width of 10 mm and a length ≥ 150 mm. The obtained sample was tested by utilizing a universal tensile machine to stretch at a rate of 500 mm/min to obtain the maximum load during the broken of the sample. The mechanical strength in the machine direction (MD) and the mechanical strength in the transverse direction (TD) were respectively calculated by dividing the maximum load with the cross-sectional area of the separator (width of the sample × the thickness of the substrate)

Measurement of peeling strength: An adhesive film (Model no. 31B, available from Nitto Denko Corporation) with a thickness of 80 µm was cut into a strip test piece with a length of 60 mm and a width of 20 mm, and adhered to a composite separator. Then the 180-degree peeling strength of middle 50 mm in longitudinal direction of the strip test piece peeled-off from the composite separator was measured by an universal tensile machine (Dachang, manufactured by Cometech, Taiwan) at a pulling rate of 50 mm/min. Average peeling strength of a composite separator was calculated by averaging peeling strengths measured by peeling-off 5 strip test pieces from the composite separator.

Impedance test: The separator for testing was cut into a sample with a diameter of 24 mm, and immersed in a standard electrolyte (1M LiPF6 solution, weight ratio of solvents: EC/DMC/EMC=1/1/1) for 12 hours to make the separator completely be osmosed by the standard electrolyte, and then sandwiched between two electrodes to measure the impedance of the separator by applying a frequency between 1000 to 200000.

### Example 2

100 g of Al₂O₃ (SA0-030EN), 8.97 g of acrylonitrile-acrylamide-methylacrylate copolymer containing lotion (BM-950B), 13 g of poly-n-vinylacetamide containing lotion (GE191-103), 1.55 g of Poly(Acrylate Ammonium) dispersant (BYK-154), and 0.5 g of polyether-modified silicone surfactant (BYK-3061) were add to mix with deionized water and well-stirred to obtained an inorganic particles containing slurry.

The obtained inorganic particles containing slurry was coated on two surfaces of a porous polyolefin substrate with a porosity of 48% and having a thickness of 9.2 µm. A composite separator with a thickness of 12.6 µm was obtained after the inorganic particles containing slurry coated on the porous polyolefin substrate was dried.

The obtained composite separator was tested by the testing methods described in Example 1. The testing results were shown as the following Table 1.

### Example 3

100 g of Al₂O₃ (SA0-030EN), 8.97 g of acrylonitrile-acrylamide-methylacrylate copolymer containing lotion (BM-950B), 5.0 g of amide containing polyacrylate lotion (GR-506), 1.43 g of Poly(Acrylate Ammonium) dispersant (BYK-154), and 0.5 g of polyether-modified silicone surfactant (BYK-3061) were add to mix with deionized water and well-stirred to obtained an inorganic particles containing slurry.

The obtained inorganic particles containing slurry was coated on two surfaces of a porous polyolefin substrate with a porosity of 48% and having a thickness of 9.2 µm. A composite separator with a thickness of 12.4 µm was obtained after the inorganic particles containing slurry coated on the porous polyolefin substrate was dried.

The obtained composite separator was tested by the testing methods described in Example 1. The testing results were shown as the following Table 1.

### Example 4

100 g of Al₂O₃ (SA0-030EN), 8.97 g of acrylonitrile-acrylamide-methylacrylate copolymer containing lotion (BM-950B), 12 g of amide containing polyacrylate lotion (SF168L), 0.4 g of Styrene-malic acid dispersant (BYK-3032), and 0.5 g of polyether-modified silicone surfactant (BYK-3061) were add to mix with deionized water and well-stirred to obtained an inorganic particles containing slurry.

The obtained inorganic particles containing slurry was coated on two surfaces of a porous polyolefin substrate with a porosity of 48% and having a thickness of 9.2 µm. A composite separator with a thickness of 12.2 µm was obtained after the inorganic particles containing slurry coated on the porous polyolefin substrate was dried.

The obtained composite separator was tested by the testing methods described in Example 1. The testing results were shown as the following Table 1.

### Example 5

100 g of Al₂O₃ (SA0-030EN), 6.92 g of acrylonitrile-acrylamide-methylacrylate copolymer containing lotion (BM-950B), 12 g of amide containing polyacrylate lotion (SF168L), 0.55 g of isopropanolamine dispersant (Angus Voltan 100), and 0.5 g of polyether-modified silicone surfactant (BYK-3061) were add to mix with deionized water and well-stirred to obtained an inorganic particles containing slurry.

The obtained inorganic particles containing slurry was coated on two surfaces of a porous polyolefin substrate with a porosity of 48% and having a thickness of 9.2 µm. A composite separator with a thickness of 12.3 µm was obtained after the inorganic particles containing slurry coated on the porous polyolefin substrate was dried.

The obtained composite separator was tested by the testing methods described in Example 1. The testing results were shown as the following Table 1.

### Example 6

75 g of Al₂O₃ (SA0-030EN), 25 g of ALOOH (AM-BL-03), 8.97 g of acrylonitrile-acrylamide-methylacrylate copolymer containing lotion (BM-950B), 13 g of poly-n-vinylacetamide containing lotion (GE191-103), 0.95 g of Poly(Acrylate Ammonium) dispersant (BYK-154), and 0.5 g of polyether-modified silicone surfactant (BYK-3061) were add to mix with deionized water and well-stirred to obtained an inorganic particles containing slurry.

The obtained inorganic particles containing slurry was coated on two surfaces of a porous polyolefin substrate with a porosity of 48% and having a thickness of 9.2 µm. A composite separator with a thickness of 12.7 µm was obtained after the inorganic particles containing slurry coated on the porous polyolefin substrate was dried.

The obtained composite separator was tested by the testing methods described in Example 1. The testing results were shown as the following Table 1.

### Example 7

50 g of Al₂O₃ (SA0-030EN), 50 g of ALOOH (AM-BL-03), 8.97 g of acrylonitrile-acrylamide-methylacrylate copolymer containing lotion (BM-950B), 13 g of poly-n-vinylacetamide containing lotion (GE191-103), 0.95 g of Poly(Acrylate Ammonium) dispersant (BYK-154), and 0.5 g of polyether-modified silicone surfactant (BYK-3061) were add to mix with deionized water and well-stirred to obtained an inorganic particles containing slurry.

The obtained inorganic particles containing slurry was coated on two surfaces of a porous polyolefin substrate with a porosity of 48% and having a thickness of 9.2 µm. A composite separator with a thickness of 12.8 µm was obtained after the inorganic particles containing slurry coated on the porous polyolefin substrate was dried.

The obtained composite separator was tested by the testing methods described in Example 1. The testing results were shown as the following Table 1.

### Example 8

100 g of Al₂O₃ (SA0-030EN), 8.97 g of acrylonitrile-acrylamide-methylacrylate copolymer containing lotion (BM-950B), 13 g of poly-n-vinylacetamide containing lotion (GE191-103), 1.55 g of Poly(Acrylate Ammonium) dispersant (BYK-154), and 0.5 g of polyether-modified silicone surfactant (BYK-3061) were add to mix with deionized water and well-stirred, and then a photo-reactive solution mixed with 0.526 g of 2-isopropylthioxanthone and 2.63 g of methyl methacrylate (MMA) were added and well-stirred at room temperature to obtained an inorganic particles containing slurry.

The obtained inorganic particles containing slurry was coated on two surfaces of a porous polyolefin substrate with a porosity of 48% and having a thickness of 9.2 µm. A composite separator with a thickness of 11.9 µm was obtained after the inorganic particles containing slurry coated on the porous polyolefin substrate was dried and irradiated with a UV light with an irradiation dosage of 500 mJ/cm² in the air.

The obtained composite separator was tested by the testing methods described in Example 1. The testing results were shown as the following Table 1.

### Example 9

100 g of Al₂O₃ (SA0-030EN), 6.92 g of acrylonitrile-acrylamide-methylacrylate copolymer containing lotion (BM-950B), 12 g of poly-n-vinylacetamide containing lotion (GE191-103), 0.55 g of isopropanolamine dispersant (Angus Voltan 100), and 0.5 g of polyether-modified silicone surfactant (BYK-3061) were add to mix with deionized water and well-stirred, and then a photo-reactive solution mixed with 0.526 g of 2-isopropylthioxanthone and 2.63 g of methyl methacrylate (MMA) were added and well-stirred at room temperature to obtained an inorganic particles containing slurry.

The obtained inorganic particles containing slurry was coated on two surfaces of a porous polyolefin substrate with a porosity of 48% and having a thickness of 9.2 µm. A composite separator with a thickness of 11.9 µm was obtained after the inorganic particles containing slurry coated on the porous polyolefin substrate was dried and irradiated with a UV light with an irradiation dosage of 500 mJ/cm² in the air.

The obtained composite separator was tested by the testing methods described in Example 1. The testing results were shown as the following Table 1.

**Table 1: Testing results of the separators obtained from Examples 1 to 9**

| | Gurley number (sec/100c.c.) | Thermal shrinkage (150°C@1hr, %) | | Peeling strength (gf/cm) | Impedance (ohm·cm²) | Moisture content | Rupture temperatur e (°C) | Puncture resistance (150°C@1 hr, gf) |
|---|---|---|---|---|---|---|---|---|
| | | MD | TD | | | | | |
| Example 1 | 93 | 1 | 1 | 56 | 0.639 | 1468 | 152 | 32 |
| Example 2 | 101 | 1.5 | 1 | 44 | 0.681 | 1218 | 158 | 27 |
| Example 3 | 95 | <2 | <2 | 57 | 0.711 | 1682 | 155 | 30 |
| Example 4 | 104 | 2 | 1.5 | 48.5 | 0.701 | 1121 | 158 | 25 |
| Example 5 | 95 | 2 | 1.5 | 54 | 0.635 | 1040 | 155 | 26 |
| Example 6 | 107 | 2 | 1 | 40 | 0.722 | 1910 | 152 | 38 |
| Example 7 | 109 | 1 | 1 | 34 | 0.762 | 2604 | 160 | 42 |
| Example 8 | 102 | 2 | 1.5 | 54 | 0.673 | 1128 | 306 | 374 |
| Example 9 | 98 | 1.5 | 1.5 | 58 | 0.681 | 1014 | 302 | 385 |

Although particular embodiments have been shown and described, it should be understood that the above discussion is not intended to limit the present invention to these embodiments. Persons skilled in the art will understand that various changes and modifications may be made without departing from the scope of the present invention as literally and equivalently covered by the following claims.

## Claims

1. A composite separator, comprising:
a porous polyolefin substrate; and
an inorganic coating layer coated on at least one surface of the porous polyolefin substrate, wherein the inorganic coating layer comprises a plurality of inorganic particles and a binder resin composition, and an using amount of the binder resin composition is between 2 weight parts and 10 weight parts per 100 weight parts of the inorganic particles;
wherein the binder resin composition comprises an acrylonitrile-acrylamide-acrylate copolymer with a glass transition temperature (Tg) less than 0 °C and an amide-containing polymer with a glass transition temperature between 150 °C and 200 °C.

2. The composite separator as claimed in claim 1, wherein an using amount of the acrylonitrile-acrylamide-acrylate copolymer with a glass transition temperature (Tg) less than 0 °C is 40 wt% to 85 wt%, and an using of the amide-containing polymer with a glass transition temperature between 150 °C and 200 °C is 15 wt% to 60 wt%.

3. The composite separator as claimed in claim 1, wherein an using amount of the acrylonitrile-acrylamide-acrylate copolymer with a glass transition temperature (Tg) less than 0 °C is 40 wt% to 80 wt%, and an using of the amide-containing polymer with a glass transition temperature between 150 °C and 200 °C is 20 wt% to 60 wt%.

4. The composite separator as claimed in claim 1, wherein the acrylonitrile-acrylamide-acrylate copolymer has a glass transition temperature (Tg) between -40 °C and 0 °C.

5. The composite separator as claimed in claim 1, wherein the inorganic coating layer has a thickness ranging between 0.1 µm and 5.0 µm.

6. The composite separator as claimed in claim 1, wherein amide-containing polymer with a glass transition temperature between 150 °C and 200 °C is poly-n-vinylacetamide, amide-methylacrylate copolymer or acrylonitrile-acrylamide-methylacrylate copolymer.

7. The composite separator as claimed in claim 1, wherein the inorganic coating layer further comprises an ammonium salt dispersant with an using amount of 0.1 weight part to 1.0 weight part per 100 weight parts of the inorganic particles.

8. The composite separator as claimed in claim 1, wherein the inorganic coating layer further comprises a siloxane surfactant with an using amount of 0.1 weight part to 1.0 weight part per 100 weight parts of the inorganic particles.

9. The composite separator as claimed in claim 1, wherein the inorganic particles of the inorganic coating layer are Mg(OH)₂, BaSO₄, BaTiO₃, HfO₂, SrTiO₃, SnO₂, CeO₂, MgO, NiO, CaO, ZnO, ZrO₂, SiO₂, Y₂O₃, Al(OH)₃, Al₂O₃, AlOOH, SiC, TiO₂, or combinations thereof, and the inorganic particles have an average diameter (D50) ranging between 0.1 µm and 2.0 µm..

10. A method for manufacturing a composite separator, comprising steps of:
providing a porous polyolefin substrate; and
coating a slurry comprising a plurality of inorganic particles, a binder resin composition and water on one or two surfaces of the porous polyolefin substrate to form an inorganic coating layer;
wherein the binder resin composition comprises an acrylonitrile-acrylamide-acrylate copolymer with a glass transition temperature (Tg) less than 0 °C and an amide-containing polymer with a glass transition temperature between 150 °C and 200 °C.

11. The method as claimed in claim 10, wherein the slurry comprises a dispersant and/or a surfactant;
wherein the dispersant is an alkanolamine dispersant, an acrylate ammonium dispersant or combinations thereof;
wherein the dispersant has an using amount of 0.1 weight part to 1.0 weight part per 100 weight parts of the inorganic particles;
wherein the surfactant is a siloxane surfactant; or
wherein the surfactant has an using amount of 0.1 weight part to 1.0 weight part per 100 weight parts of the inorganic particles.

12. A composite separator, comprising:
a porous polyolefin substrate; and
an inorganic coating layer coated on at least one surface of the porous polyolefin substrate, wherein the inorganic coating layer comprises a plurality of inorganic particles, a photo-reactive agent and a binder resin composition, wherein the binder resin composition has an using amount between 2 weight parts and 10 weight parts per 100 weight parts of the inorganic particles, and the photo-reactive agent has an using amount between 0.1 weight parts and 1.5 weight parts per 100 weight parts of the inorganic particles;
wherein the binder resin composition comprises an acrylonitrile-acrylamide-acrylate copolymer with a glass transition temperature (Tg) less than 0 °C and an amide-containing polymer with a glass transition temperature between 150 °C and 200 °C.

13. The composite separator as claimed in claim 12, wherein the photo-reactive agent is 2-isopropylthioxanthone, thioxanthone, thioxanthone derivatives or combinations thereof.

14. A method for manufacturing a composite separator, comprising steps of:
providing a porous polyolefin substrate;
coating a slurry comprising a plurality of inorganic particles, a binder resin composition, water and a photo-reactive solution on one or two surfaces of the porous polyolefin substrate; and
drying and irradiating the slurry with UV light to form an inorganic coating layer;
wherein the binder resin composition comprises an acrylonitrile-acrylamide-acrylate copolymer with a glass transition temperature (Tg) less than 0 °C and an amide-containing polymer with a glass transition temperature between 150 °C and 200 °C.

15. The method as claimed in claim 14, wherein the photo-reactive solution comprises a photo-reactive agent and a solvent, and the photo-reactive agent has an using amount between 0.1 weight parts and 1.5 weight parts per 100 weight parts of the inorganic particles.

16. The method as claimed in claim 14, wherein the photo-reactive agent is 2-isopropylthioxanthone, thioxanthone, thioxanthone derivatives or combinations thereof.

17. The method as claimed in claim 14, wherein the solvent is toluene, methanol, methyl methacrylate, ethyl acetate, 1,2-dichloroethane, acetone, or water, or combinations thereof.
